# EUROPÄISCHE PATENTSCHRIFT

(11) **EP 1 022 493 B1**
(45) Veröffentlichungstag und Bekanntmachung des Hinweises auf die Patenterteilung: **09.02.2005**
(21) Anmeldenummer: 99124201.7
(22) Anmeldetag: 03.12.1999
(51) Int. Cl.: F16H 59/10, H01H 21/74

(54) **Schaltsystem**
Switching system
Système de commutation

(30) Priorität: 23.01.1999 DE 19902639
(43) Veröffentlichungstag der Anmeldung: 26.07.2000
(73) Patentinhaber: Bayerische Motoren Werke Aktiengesellschaft, 80809 München (DE)
(72) Erfinder: Birzl, Willibald, 86668 Karlshud (DE); Herger, Matthias, 82178 Puchheim (DE)

(56) Entgegenhaltungen:
- DE-C- 4 039 842
- US-A- 4 654 626
- US-A- 5 508 703
- US-A- 5 621 317
- US-A- 5 783 785
- PATENT ABSTRACTS OF JAPAN vol. 1999, no. 03, 31. März 1999 (1999-03-31) & JP 10 332315 A (AISIN SEIKI CO LTD), 18. Dezember 1998 (1998-12-18) & US 5 949 344 A (YASUDA ET AL.) 7. September 1999 (1999-09-07)
- PATENT ABSTRACTS OF JAPAN vol. 1998, no. 12, 31. Oktober 1998 (1998-10-31) & JP 10 199372 A (TOKAI RIKA CO LTD), 31. Juli 1998 (1998-07-31)
- PATENT ABSTRACTS OF JAPAN vol. 1996, no. 03, 29. März 1996 (1996-03-29) & JP 07 301309 A (JATCO CORP), 14. November 1995 (1995-11-14)

## Beschreibung

Die Erfindung betrifft ein Schaltsystem mit einem Schaltelement gemäß dem Oberbegriff des Anspruchs 1.

Eine Schaltsysteme nach dem Oberbegriff des Anspruch 1 ist aus der JP 10 33 2315 bekannt.

Schaltsysteme mit einem Schaltelement finden in einem weiten Einsatzbereich Verwendung. Vorliegend wird die Erfindung anhand des Einsatzes eines Schaltelements in einem Fahrzeug erläutert. Die Erfindung soll jedoch nicht auf dieses Einsatzgebiet beschränkt sein. Ein vorgenanntes Schaltelement kann beispielsweise eine Gangwähleinrichtung eines Fahrzeugs sein, bei der ein Wählhebel in verschiedene Stellungen bewegt werden kann.

Bei dem vorliegenden Schaltsystem wird ein Schaltelement in zumindest einer Richtung über einen definierten Wegbereich aus seiner Ruhestellung hinaus bewegt. Das Schaltelement kehrt selbständig in seine Ruhestellung zurück. Solche Schalthebel werden beispielsweise bei automatisierten Getrieben verwendet. Dabei stellt die Bewegung des Schalthebels in eine Richtung einen Hochschaltvorgang und in die entgegengesetzte Richtung einen Rückschaltvorgang dar bzw. löst einen solchen aus.

Es ist weiter bekannt, Schaltsysteme vorzusehen, bei denen durch ein Überdrücken eines Wählhebels in eine bestimmte Richtung eine Zusatzinformation bereitgestellt wird, welche je nach Steuergerätausbildung in einer verschiedenen Reaktion mündet. Ferner ist der Einsatz von Potentiometern bekannt, mit dem eine kontinuierliche Verstellung eines Schaltelements detektierbar gemacht werden soll.

Die US 5,949,344 A beschreibt einen Positionssensor mit einem Dreharm mit einer Mehrzahl von Kontaktabnehmern die auf einer Kontaktplatte verschiedene Kontaktbereiche erfassen und somit je nach Bewegungsrichtung bei einem kontinuierlichen Verstellvorgang in eine Richtung ein ausschließlich monoton steigendes oder monoton fallendes Signal erzeugen.

Ferner ist aus der US 5,508,708 A eine Folientastatur bekannt, bei der an verschiedenen Schaltpositionen durch eine Kontaktbrücke in einer oberen Folie Kontaktenden in einer unteren Folie miteinander verbunden werden. Gemäß einer Ausführung, bei der einzelne Schaltpositionen kreisförmig - ähnlich den Zahlen einer Telefonwählscheibe - angeordnet sind, können in Abhängigkeit der erfassten "Wählgeschwindigkeit" bzw. des erfassten Bedienweges in einer bestimmten unveränderbaren Zeit unterschiedliche Signalausgänge einer Logik angesteuert werden.

Aufgabe der vorliegenden Erfindung ist es, ein Schaltsystem bereitzustellen, bei dem diskrete Verstellpositionen eindeutig und funktionssicher erkannt werden.

Diese Aufgabe wird durch die im Anspruch 1 genannten Merkmale gelöst.

Demgemäß ist die Erfassungseinrichtung so ausgebildet, daß bei einem kontinuierlichen Verstellvorgang in eine Verstellrichtung ein ausschließlich monoton steigendes oder fallendes Signalmaß abgegeben wird. Bei einer kontinuierlichen Rückkehr von einer Verstellposition in die Ruhestellung wird in umgekehrter Weise ausschließlich ein monoton fallendes oder steigendes Signalmaß abgegeben. Das Signalmaß ist dabei insbesondere stufenförmig ausgebildet.

Durch die erfindungsgemäße Ausbildung und die Vermeidung von entgegengesetzt verlaufenden Signalflanken während eines kontinuierlichen Stellvorganges kann ein Schaltverhalten eindeutig zugeordnet werden. Insbesondere treten bei einem kontinuierlichen Verstellvorgang in eine Richtung in definierten Wegabständen monoton steigende oder monoton fallende Signalflanken auf. Bei Überlagerung solcher Signalflanken bekommt man eine Stufenfunktion, welche durch die Höhe des Signalmaßes die Verstellposition des Schaltelementes sicher zum Ausdruck bringt.

Erfindungsglemäß ist zu jeder detektierbaren Verstellposition ein elektrischer Schaltkontakt vorgesehen, der jeweils mit einem zugeordneten Kontakt am Schaltelement ab seiner Verstellposition, der er zugeordnet ist, bis zur Extremverstellposition des Schaltelements zusammenwirkt oder in Verbindung steht.

Das Schaltsystem weist vorzugsweise eine Auswerteeinheit auf, welche derart ausgebildet ist, daß die Schaltzeiten von einer zu einer nächsten Schaltposition erfaßt und berücksichtigt werden können und ein entsprechendes oder entsprechend geändertes Signal abgebar ist. Durch diese Maßnahme kann auf die Verstellgeschwindigkeit des Schaltelements geschlossen und über diese E rkenntnis a uf d ie Wünsche des Bedieners, beispielsweise die Geschwindigkeit oder die Art des Gangwechsels, eingegangen werden. So kann man bei einer schnellen Betätigungen des Wählhebels einen Schaltwunsch in Richtung einer sportlicheren Fahrweise und bei einer langsameren Betätigungen des Wählhebels dagegen eine eher komfortablere Fahrweise annehmen.

Die Erfindung wird nachfolgend mit Bezug auf die beiliegenden Zeichnungen und anhand zweier Ausführungsbeispiele erläutert. Die Zeichnungen zeigen in
- Fig. 1: eine schematische Funktionsdarstellung eines erfindungsgemäßen Schaltsystems,
- Fig. 2: eine schematische Schaltanordnung einer weiteren Ausführungsform eines erfindungsgemäßen Schaltsystems,
- Fig. 3: ein Diagramm in der Signalverläufe während eines Verstellvorgangs eines Wählhebels gemäß der Ausführungsform in Fig. 1 dargestellt sind und
- Fig. 4: ein Diagramm, welches die Auswahl eines Modus in Abhängigkeit von der Verstellgeschwindigkeit eines Wählhebels zeigt.

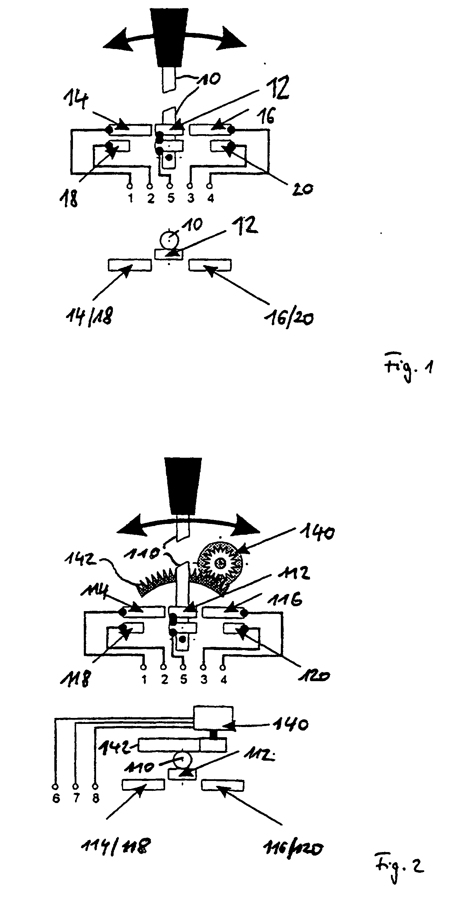

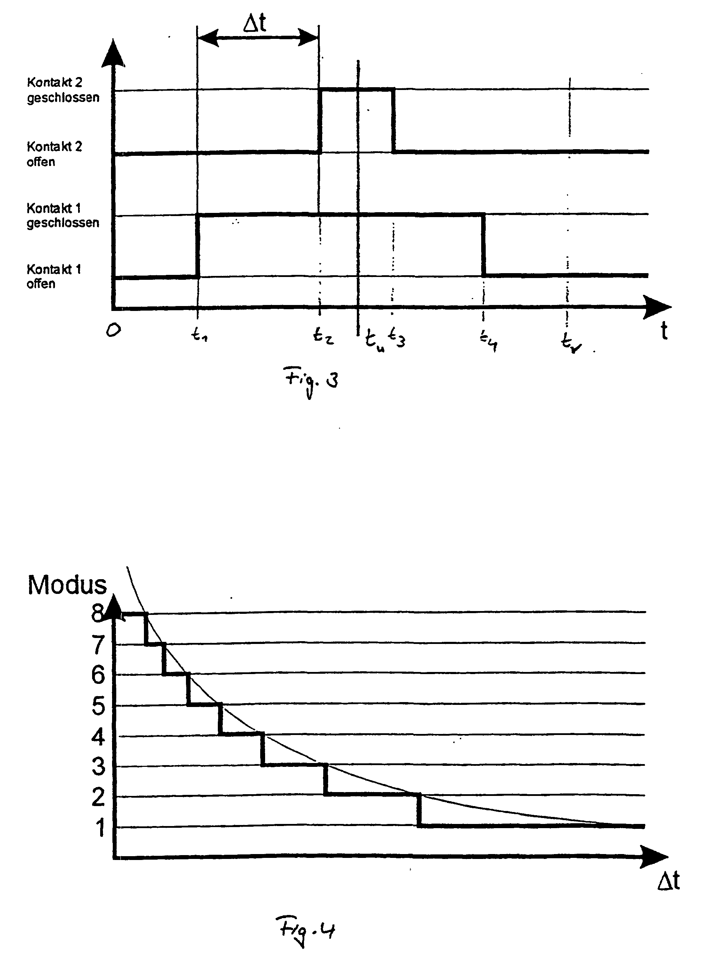

In Fig. 1 ist ein erfindungsgemäßes Schaltsystem mit einem als Wählhebel 10 ausgebildeten Schaltelement dargestellt. Der Wählhebel 10 ist an einem unteren Ende angelenkt und kann aus seiner in Fig. 1 dargestellten Ruhestellung in zwei Verstellrichtungen (vorne/hinten) verschwenkt werden, wobei er über ein elastisches Element (nicht dargestellt) in Richtung seiner Ruheposition (mittige Stellung) beaufschlagt ist.

Am Wählhebel 10 sind zwei Reiter 12 in Form von elektrischen Kontakten angeordnet, die über eine Leitung mit einem Ausgang 5 verbunden sind. Darüber hinaus sind elektrische Kontaktstreifen 14, 16, 18 und 20 in der in Fig. 1 gezeigten Form im Verschwenkbereich des Wählhebels 10 angeordnet. Eine seitliche Versetzung der Kontakte 14/18 und 16/20 einerseits und der Reiter 12 andererseits kann man aus dem unteren Teil der Fig. 1 entnehmen, welche eine Draufsicht auf das erfindungsgemäße Schaltsystem darstellt. Jeder Schaltkontakt 14, 16, 18 und 20 ist mit einem entsprechenden Anschluß 1, 2, 3 und 4 verbunden.

Beim Auslenken des Wählhebels 10 in Fig. 1 nach links kommt der Reiter 12 zunächst mit dem Kontakt 14 in Berührung und stellt eine Verbindung zwischen den Anschlüssen 1 und 5 her. Diese Verbindung bleibt bis zum Erreichen des maximalen Verschwenkweges bestehen. Ab einer weiteren Verstellposition erreicht der Reiter 12 den Kontakt 18 und stellt eine Verbindung zwischen den Anschlüssen 2 und 5 dar. Bei Anliegen einer Spannung an den Kontakten 1 und 2 bzw. bei Abgreifen der Verbindungen zwischen 1 und 5 sowie 2 und 5 kann nun festgestellt werden, in welchem Verschwenkbereich sich der Wählhebel 10 momentan befindet.

Eine analoge Erfassungsmöglichkeit besteht bei Verschwenken des Wählhebels in Fig. 1 nach rechts. Hierbei werden entsprechend Kontakte zwischen den Anschlüssen 5 einerseits und 3 sowie 4 andererseits, welche den Kontakten 16 bzw. 20 zugeordnet sind, geschlossen.

Die Auswirkung eines Verschwenkens des Wählhebels 10 nach rechts kann man anhand der Fig. 3 erkennen. In Fig. 3 ist ein Zeitdiagramm dargestellt, aus welchem zu ersehen ist, welcher Kontakt gerade offen bzw. geschlossen ist. Dabei entspricht der Kontakt 1 in Fig. 3 dem Kontakt 16 in Fig. 1. Der Kontakt 2 in Fig. 3 entspricht dem Kontakt 20 in Fig. 1.

Zum Zeitpunkt 0 befindet sich der Wählhebel 10 in seiner Ruheposition. Anschließend wird der Wählhebel 10 nach rechts verschwenkt. Im Zeitpunkt t₁ erreicht sein Reiter 12 den Kontakt 16, wodurch dieser Kontakt geschlossen und ein Spannungssignal erzeugt wird. Im weiteren Verlauf des Verschwenkens des Wählhebels 10 in die gleiche Auslenkrichtung nach rechts erreicht der Wählhebel 10 nach einer Zeitspanne Δt im Zeitpunkt t₂ den Kontakt 20, wodurch der Kontakt 2 geschlossen und ein weiteres Spannungssignal erzeugt wird. Wird der Wählhebel 10 weiter bis zu einer Umkehrposition, welche zum Zeitpunkt tᵤ stattfindet, bewegt, so passiert zunächst nichts weiter.

Auch nach Erreichen der Umkehrposition beim Zurückbewegen des Wählhebels 10 in seine Ruhestellung tritt erst beim Zeitpunkt t₃ die nächste Reaktion ein, nämlich das Öffnen des Kontaktes 2, da der Reiter 12 des Wählhebels 10 außer Kontakt mit der elektrischen Kontaktfläche 20 gerät. Ab einem Zeitpunkt t₄ kommt der Wählhebel 10 auch außer Kontakt mit dem elektrischen Kontakt 16, so daß beide Kontakte (Kontakt 1 und Kontakt 2) nunmehr offen sind. Die vorher aufgebauten Spannungen sind dabei wieder sequentiell abgefallen. Zum Zeitpunkt tᵣ hat der Wählhebel 10 wieder seine Ruhestellung erreicht.

In erfindungsgemäßer Weise treten beim Bewegen des Wählhebels 10 in eine Verstellrichtung lediglich ansteigende Signalflanken oder Signalmaße auf, beim Zurückbewegen des Wählhebels 10 treten gerade in umgekehrter Weise monoton fallende Signalflanken auf. Damit läßt sich eine besonders einfache Detektion von verschiedenen Verstellpositionen ermitteln. Natürlich können auch mehrere Verstellpositionen durch eine entsprechende Anordnung von Schaltkontakten auf einfache und kostengünstige Weise detektiert werden.

Da die Enden der elektrischen Schaltkontakte eine bestimmte Verschwenkstrecke voneinander entfernt sind, gibt der Zeitraum Δt zwischen zwei Verstellpositionen einen Aufschluß über die Verschwenkgeschwindigkeit. Natürlich muß dabei nicht der in Fig. 3 gezeigte Zeitraum zwischen den Zeitpunkten t₁ und t₂ gewählt werden. Es können auch andere Zeiträume Δt gewählt werden. Allerdings ist der in Fig. 3 gewählte Zeitraum auf besonders einfache Weise zu detektieren.

Abhängig von der Verstellgeschwindigkeit, also dem detektierten Zeitraum Δt, kann ein Gangwahlmodus zugewiesen werden. Dies ist aus Fig. 4 ersichtlich. Dort wird je nach Verstellgeschwindigkeit ein Modus 1 bis 8 ausgewählt, entsprechend dem beispielsweise ein Schaltvorgang bei einem Fahrzeug durchgeführt wird. Bei einem Modus 1 wird dabei ein besonders komfortabler Schaltvorgang gewählt. Bei einem Modus 8 ein besonders sportlicher. Die Modi dazwischen geben einzelne Abstufungen an. Natürlich kann der gewählte Modus auch Einfluß auf andere Parameter besitzen, nämlich auf die Direktheit der Lenkung oder die Dämpfung zwischen Rädern und Fahrzeugaufbau.

Gemäß Fig. 2 ist eine weitere Ausführungsform eines erfindungsgemäßen Schaltsystems dargestellt, wobei die in Fig. 1 bereits dargestellten Vorrichtungselemente analog bezeichnet sind, also 12 = 112, 10 = 110, etc. Zusätzlich zu der in Fig. 1 dargestellten Ausführungsform ist ein Potentiometer 140 mit einem Zahnrad angeordnet, welches auf einer Zahnleiste 142 abrollt. Dieses Potentiometer 140 ist mit weiteren Anschlüssen 6, 7 und 8 verbunden, so daß noch zusätzliche Aussagen über den Verstellweg und die Verstettgeschwindigkeit getroffen werden können.

Insgesamt gibt die vorliegende Erfindung eine einfache und kostengünstige Möglichkeit, ein eindeutiges Schaltverhalten zu gewährleisten und eine genaue Schaltpositionserfassung sicherzustellen.

## Patentansprüche

1. Schaltystem mit einem Schaltelement,
- welches in zumindest einer Richtung über einen definierten Wegbereich aus seiner Ruhestellung verstellbar ist, und dessen Verstellmaß von einer Erfassungseinrichtung detektiert wird, wobei zumindest zwei diskrete Verstellpositionen detektierbar sind,
- und wobei die Erfassungseinrichtung derart ausgebildet ist, um bei einem kontinuierlichen Verstellvorgang in eine Richtung ein ausschließlich monoton steigendes oder fallendes Signalmaß und bei einer kontinuierlichen Rückkehr von einer verstellten Position in die Ruhestellung in umgekehrter Weise ein ausschließlich monoton fallendes oder steigendes Signalmaß abzugeben,
**dadurch gekennzeichnet, dass**
- das Schaltelement als Wählhebel (10) ausgebildet ist, der selbständig in seine Ruhestellung zurückkehrt,
- der Wählhebel (10) zwei vertikal voneinander beabstandete, als Kontakte ausgebildete, Reiter (12) aufweist,
- jedem der beiden Reiter (12) entlang dem Verschwenkbereich des Wählhebels (10) ein Kontaktstreifen ( 14, 18; 16, 20) zugeordnet ist, und die Kontaktstreifen (14, 18; 16, 20) eine unterschiedliche Länge aufweisen und derart angeordnet sind, dass in einer ersten Verstellposition des Wählhebels (10) mit geringerem Verschwenkmaß der erste Kontaktstreifen (14; 16) über einen der beiden Reiter (12) kontaktiert wird und in einer zweiten Verstellposition des Wählhebels mit größerem Verschwenkmaß zusätzlich der zweite Kontaktstreifen (18; 20) über den anderen der beiden Reiter (12) kontaktiert wird.

2. Schaltsystem nach Anspruch 1,
**dadurch gekennzeichnet,**
**daß** eine Auswerteeinheit zur Signalauswertung vorgesehen ist.

3. Schaltsystem nach Anspruch 2,
**dadurch gekennzeichnet,**
**daß** die Auswerteeineit derart ausgebildet ist, daß die Schaltzeit von einer zu einer anderen Schaltposition erfaßbar und ein entsprechendes Signal abgebbar ist.

4. Schaltsystem nach einem der vorhergehenden Ansprüche,
**dadurch gekennzeichnet,**
**daß** das Schaltelement eine Gangwähleinrichtung eines Fahrzeugs ist und die Auswerteeinheit mit einer Getriebesteuerung in Verbindung steht.

5. Schaltsystem nach einem der vorhergehenden Ansprüche,
**dadurch gekennzeichnet,**
**daß** zusätzlich zu der Erfassungseinrichtung ein Potentiometer vorgesehen ist, welches ein der Verstellung kontinuierliches Signal abgibt.

## Claims

1. A switching system comprising a switching element,
- which can be adjusted in at least one direction via a defined path range from its rest position, and the extent of adjustment of which is detected by a detection device, wherein at least two discreet adjustment positions can be detected,
- and wherein the detection device is designed in such a way as to emit an exclusively monotonically rising or falling signal measure in the case of a continuous adjusting process in one direction, and in the reverse manner, to emit an exclusively monotonically falling or rising signal measure in the case of a continuous return from an adjusted position into the rest position, **characterised in that**
- the switching element is designed as a selector lever (10), which automatically returns into its rest position,
- the selector lever (10) has two riders (12) designed as contacts and spaced apart from one another vertically,
- a contact strip (14, 18; 16, 20) is associated with each of the two riders (12) along the pivotal range of the selector lever (10), and the contact strips (14, 18; 16, 20) have a different length and are arranged in such a way that the first contact strip (14; 16) is contacted via one of the two riders (12) in a first adjustment position of the selector lever (10) with a smaller degree of pivoting and, the second contact strip (18; 20) is also contacted via the other of the two riders (12) in a second adjustment position of the selector lever with a greater degree of pivoting.

2. A switching system according to claim 1, **characterised in tha**t an evaluation unit is provided for signal evaluation.

3. A switching system according to claim 2, **characterised in that** the evaluation unit is designed in such a way that the switching time from one to another switching position can be detected and a corresponding signal can be emitted.

4. A switching system according to any one of the preceding claims **characterised in that** the switching element is a gear selection device of a vehicle and the evaluation unit is connected to a transmission control system.

5. A switching system according to any one of the preceding claims, **characterised in that**, in addition to the detection device, a potentiometer, which emits a continuous adjustment signal, is provided.

## Revendications

1. Système de commutation comprenant un élément de commutation,
- qui peut être déplacé de sa position de repos dans au moins une direction sur un tronçon de trajet défini, et dont l'amplitude de déplacement est détectée par un dispositif de détection, au moins deux positions de réglage discrètes étant alors détectables,
- le dispositif de détection étant configuré pour fournir lors d'un processus de réglage continu dans une direction une valeur de signal croissant ou décroissant de façon exclusivement monotone, et lors d'un retour continu d'une position réglée dans la position de repos une valeur de signal décroissant ou croissant de façon exclusivement monotone, en sens inverse,
**caractérisé en ce que**
- l'élément de commutation présente la forme d'un levier de sélection (10) qui retourne automatiquement dans sa position de repos,
- le levier de sélection (10) présente deux cavaliers (12) en forme de contacts verticalement distancés l'un de l'autre,
- à chacun des deux cavaliers (12) une bande de contact (14, 18 ; 16, 20) est associée le long de la zone de réglage du levier de sélection (10), et les bandes de contact (14, 18 ; 16, 20) présentent une longueur différente en étant disposées de telle sorte que dans une première position de réglage du levier de sélection (10) d'une amplitude de réglage plus faible la première bande de contact (14 ; 16) est mise en contact par l'un des deux cavaliers (12) et dans une deuxième position de réglage du levier de sélection d'une ampleur de réglage plus importante la deuxième bande de contact (18 ; 20) est également mise en contact par l'autre des deux cavaliers (12).

2. Système de commutation selon la revendication 1,
**caractérisé en ce qu'**
une unité d'exploitation est prévue pour exploiter les signaux.

3. Système de commutation selon la revendication 2,
**caractérisé en ce que**
l'unité d'exploitation est configurée de manière à pouvoir détecter le temps de commutation d'une position de commutation dans l'autre et fournir un signal correspondant.

4. Système de commutation selon l'une quelconque des revendications précédentes,
**caractérisé en ce que**
l'élément de commutation est un dispositif de sélection de vitesse d'un véhicule et l'unité d'exploitation est reliée à une boîte de vitesse.

5. Système de commutation selon l'une quelconque des revendications précédentes,
**caractérisé en ce qu'**
en plus du dispositif de détection un potentiomètre est fourni un signal continu en fonction du réglage.
